# EUROPEAN PATENT APPLICATION

(11) **EP 2 657 191 A1**
(43) Date of publication of application: **30.10.2013**
(21) Application number: 10861052.8
(22) Date of filing: 20.12.2010
(51) Int. Cl.: C01G 45/02, B01J 23/34

(54) **PREPARATION METHOD AND USE OF MANGANESE DIOXIDE NANO-ROD**

(71) Applicant: OCEAN'S KING LIGHTING SCIENCE & TECHNOLOGY CO., LTD., Guangdong 518054 (CN)
(72) Inventor: ZHOU, Mingjie, Shenzhen, Guangdong 518054 (CN); DENG, Huiren, Shenzhen, Guangdong 518054 (CN); WANG, Yaobing, Shenzhen, Guangdong 518054 (CN)
(74) Representative: Brunetti, Fabrizio
(86) International application number: PCT/CN2010/079985
(87) International publication number: WO 2012/083511

(57) **Abstract**

Provided are a preparation method and use of manganese dioxide nano-rod. The preparation method comprises the following steps: mixing manganese salt solution and hydrogen peroxide solution to prepare a mixed solution, and adjusting the pH value of the mixed solution to 4-6; subjecting the mixed solution to hydrothermal reaction at 150-190°C to produce manganese dioxide precipitate; cooling the product of the hydrothermal reaction, and collecting the manganese dioxide precipitate after solid-liquid separating; washing and drying the manganese dioxide precipitate to obtain the manganese dioxide nano-rod. The method is simple, does not need high temperature calcination, and consumes little energy and oxidant, while the purity of the manganese dioxide is high. The manganese dioxide nano-rod has a high catalytic effect on decomposing hydrogen peroxide.

## Description

### TECHNICAL FIELD

The present invention relates to the technical field of inorganic chemical industry, and particularly to manganese dioxide nano-rods, and preparation method and use thereof.

### BACKGROUND ART

Today, energy conservation and environmental protection have become two concerns all over the world. Thus, the research efforts of scientists worldwide focus on the development of effective, novel and environment-friendly products. Hydrogen peroxide is an environment-friendly and high-energy fuel that can be used in the aerospace application. For the purpose of giving high energy instantaneously, addition of effective catalyzer is required to promote the decomposition of hydrogen peroxide.

At present, manganese dioxide (MnO₂) is typically prepared by adding a great amount of mineralizing agent and calcining at high temperature, or adding a great amount of oxidizing agent, which leads to serious environmental pollution, high consumption of raw materials and energy, and high cost.

### DISCLOSURE OF THE INVENTION

### Technical problem

The technical problem to be solved by the present invention is to overcome the shortcomings in the art as described above. The present invention provides manganese dioxide nano-rods and a preparation method thereof characterized in low level of oxidizing agent, low consumption of energy, low cost and simple process.

Further, the present invention provides the use of manganese dioxide nano-rods prepared by the method according to the present invention as a catalyzer in the decomposition of hydrogen peroxide.

### Technical solution

The technical solution for solving the technical problem of the present invention is described as below:
A preparation method of manganese dioxide nano-rods comprises the steps of:
   mixing manganese salt solution and hydrogen peroxide to prepare a mixed solution, and adjusting the pH of the mixed solution to 4-6;
   subjecting the mixed solution of pH 4-6 to hydrothermal reaction at 150-190°C, to produce manganese dioxide precipitate;
   subjecting the product of the hydrothermal reaction to solid-liquid separation after cooling, and collecting the manganese dioxide precipitate;
   washing and drying the manganese dioxide precipitate to obtain manganese dioxide nano-rods.

Manganese dioxide nano-rods prepared according to above method have a diameter of 200 nm to 500 nm and a length of 5 to 15 µm, and further have manganese dioxide nano-particles in the form of plush or snowflake attached to their surfaces.

### Technical effects

According to the preparation method of manganese dioxide nano-rods described above, manganese dioxide nano-rods can be produced by directly mixing manganese salt solution and hydrogen peroxide to carry out hydrothermal reaction. The preparation method is characterized in simple process, without calcination at high temperature, low consumption of energy, low level of oxidizing agent and low cost. Moreover, due to no mineralizing agent added in the method, manganese dioxide nano-rods thus prepared have high purity and small volume, so that they have high catalytic efficiency when used as a catalyzer in the decomposition of hydrogen peroxide.

### BRIEF DESCRIPTION OF THE DRAWINGS

Fig. 1 is a flow chart of the preparation method of manganese dioxide nano-rods according to examples of the present invention;
Fig. 2 is a SEM photograph showing the structure of manganese dioxide nano-rods prepared according to Example 1 of the present invention with a magnification of 5000 times;
Fig. 3 is a SEM photograph showing the structure of manganese dioxide nano-rods prepared according to Example 1 of the present invention with a magnification of 40000 times;
Fig. 4 is a graph showing the reaction rate of decomposition of hydrogen peroxide catalyzed by manganese dioxide nano-rods prepared according to Example 1 of the present invention versus time.

### DETAILED DESCRIPTION OF THE EMBODIMENTS

For further illustrating the purposes, technical solutions and advantages of the present invention, the invention will be described in more details with reference to the examples. It should be understood that the examples are provided for illustrating rather than limiting the present invention.

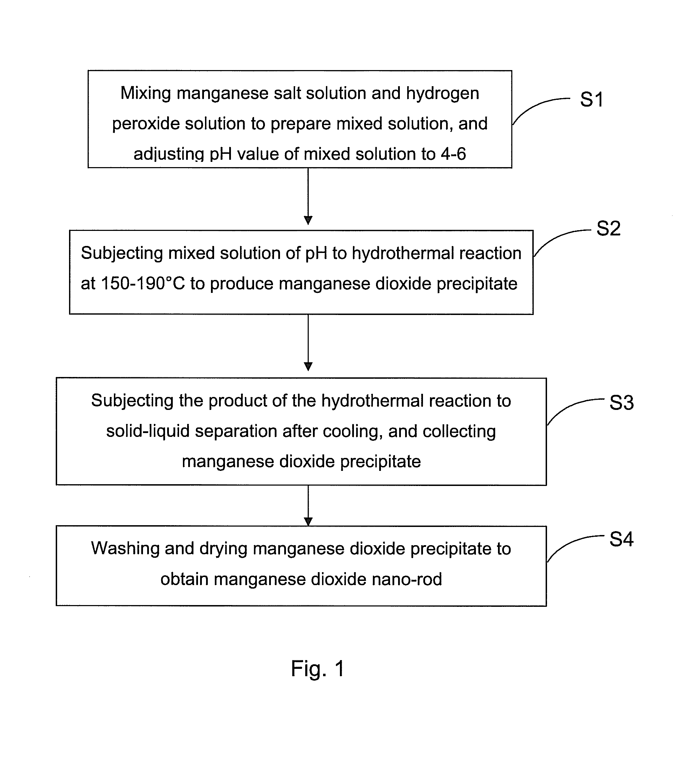

Examples of the present invention provide a preparation method of manganese dioxide nano-rods which characterized in low consumption of energy, low level of oxidizing agent, low cost and simple process. As shown in Fig.1, the method comprises the steps of:
- S1:: mixing manganese salt solution and hydrogen peroxide to prepare a mixed solution, and adjusting the pH of the mixed solution to 4-6;
- S2:: subjecting the mixed solution of pH 4-6 to hydrothermal reaction at 150-190°C, to produce manganese dioxide precipitate;
- S3:: subjecting the product of the hydrothermal reaction to solid-liquid separation after cooling, and collecting the manganese dioxide precipitate;
- S4:: washing and drying the manganese dioxide precipitate to obtain manganese dioxide nano-rods.

Thus, in the examples of the present invention, according to the preparation method of manganese dioxide nano-rods, manganese dioxide nano-rods can be produced by directly mixing manganese salt solution and hydrogen peroxide to carry out hydrothermal reaction. The preparation method is characterized in simple process, without calcination at high temperature, low consumption of energy, low level of oxidizing agent and low cost. Moreover, due to no other non-volatile ions added, manganese dioxide nano-rods thus prepared have high purity.

Particularly, in step S1 of the preparation method of manganese dioxide nano-rods described above, the manganese salt is preferably at least one of manganese nitrate, manganese carbonate, manganese sulfate, manganese chloride, manganese acetate. The level of the manganese salt in the solution is not specifically limited and can be flexibly determined according to the desired yield of manganese dioxide nano-rods. When a large yield of manganese dioxide nano-rods is desired, a high level solution of the manganese dioxide such as a 50 wt% solution can be formulated. To avoid the incorporation of impurities, it is preferable to use the analytically pure manganese salt. Of course, when manganese salt solution is prepared, a suitable amount of acid can be added to produce a homogeneous solution. For example, when manganese carbonate solution is prepared, a suitable amount of acid can be added to make the manganese carbonate dissolved. It is preferable to use hydrochloric acid or nitric acid to minimize the impurities and thereby to improve the purity of manganese dioxide nano-rods. It is preferable to use pure hydrogen peroxide to improve the purity and the productivity of manganese dioxide nano-rods and reduce the discharge of wastewater.

In step S1, manganese nitrate and hydrogen peroxide are mixed preferably in a mole ratio of 1:0.05 to 1:0.5, more preferably 1:0.03 to 1:0.5, and most preferably 1:0.3. According to such mixing ratios, it is useful to save the raw materials and improve the productivity of manganese dioxide nano-rods. Furthermore, the manganese dioxide nano-rods thus prepared have uniform diameters, and have many manganese dioxide nano-particles in the form of plush or snowflake attached to their surfaces which is useful to improve the catalytic performance thereof.

It is preferable to use ammonia with a mass concentration of 1-10%, further preferably 1-3% to adjust the pH of the mixed solution. The pH of the mixed solution is preferably adjusted to 4. A suitable pH condition is established for the hydrothermal reaction in the step S3 by adjusting the pH of the mixed solution. Use of ammonia preferably with above-mentioned concentration further assures the stability of the pH condition for the hydrothermal reaction. Moreover, due to the volatility of ammonia, the purity of the produced manganese dioxide nano-rods is improved.

In step S2 of the preparation method of manganese dioxide nano-rods described above, the hydrothermal reaction carries out at 150°C to 200°C, which ensures the generation of manganese dioxide nano-rods. Further, the temperature of the hydrothermal reaction is preferably 170°C to 180°C, more preferably 180°C. In addition, such preferred temperature range is advantageous to positively promote the reaction between manganese salt and hydrogen peroxide, i.e. the reaction to generate manganese dioxide nano-rods. The hydrothermal reaction preferably carries out for 6 to 14 hours, further preferably for 10 to 12 hours, and more preferably for 12 hours with the proviso that the hydrothermal reaction is conducted at a temperature in the above-mentioned range of temperature. The preferred reaction time period allows the complete reaction between manganese salt and hydrogen peroxide and the minimum consumption of energy. It is preferred to use a hydrothermal reaction autoclave as a vessel of the hydrothermal reaction, since the hydrothermal reaction autoclave can provide a suitable pressure as well as the above-mentioned temperature for the hydrothermal reaction, which is beneficial to the generation of manganese dioxide nano-rods.

In step S3 of the preparation method of manganese dioxide nano-rods described above, the cooling methods commonly used in the art can be employed, and air cooling is preferably used from the viewpoint of minimizing the process steps and the consumption of energy. The solid-liquid separation of the hydrothermal reaction product can be carried out by any means of collecting manganese dioxide precipitate, such as by filtering or centrifugating.

In step S4 of the preparation method of manganese dioxide nano-rods described above, the washing process is carried out to remove impurities such as ions in the manganese dioxide precipitate for the purpose of purifying the manganese dioxide precipitate. The washing process is preferably implemented by washing the manganese dioxide precipitate with distilled water and ethanol in order. Such preferred washing process is more useful to remove those impurities mixed in the manganese dioxide precipitate, such as the by-products generated in the hydrothermal reaction. More preferably, washing with ethanol is carried out after the pH of the effluent obtained from washing the manganese dioxide precipitate with distilled water reaches 6 to 7, which is more beneficial to remove impurities mixed in the manganese dioxide precipitate.

In step S4, drying of the washed manganese dioxide precipitate is carried out to further remove the impurities and water remained in the manganese dioxide precipitate, by which impurities and water are volatilized during heating, and thus the manganese dioxide precipitate is further purified. It is preferred to dry the washed manganese dioxide precipitate under vacuum at 50°C to 100°C, more preferably at 50°C to 60°C, for 8 to 48 hours, more preferably for 20 to 24 hours. Vacuum drying is preferably used, which is beneficial to the stability of the thus produced manganese dioxide nano-rods. Of course, other drying methods commonly used in the art can also be employed.

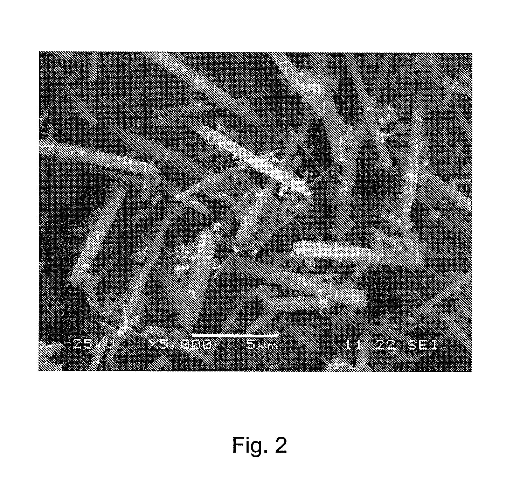

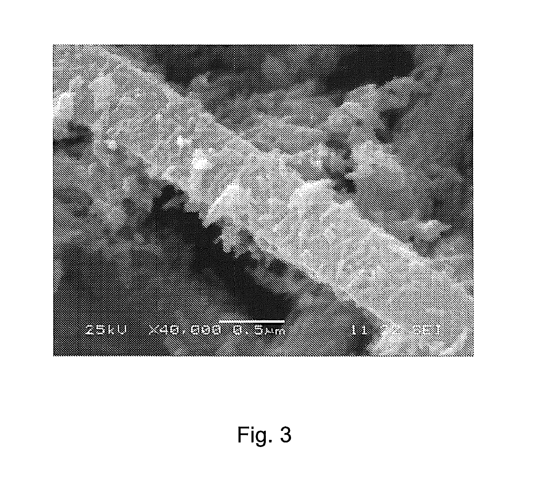

Manganese dioxide nano-rods prepared by the method according to the present invention above have a diameter of 200 to 500 nm and a length of 5 to 15 µm, and have manganese dioxide nano-particles in the form of plush or snowflake attached to their surfaces. Manganese dioxide nano-rods prepared according to the present invention above have a uniform diameter. Moreover, manganese dioxide nano-particles in the form of plush or snowflake are formed and attached to the surfaces of the manganese dioxide nano-rods, which is beneficial to improve the catalytic performance thereof. The structure of the manganese dioxide nano-rods is shown in the SEM photographs of Fig. 2 and Fig. 3.

Examples of the present invention further provide the use of manganese dioxide nano-rods as a catalyzer in the decomposition of hydrogen peroxide, wherein said manganese dioxide nano-rods are prepared by the method according to the present invention above. It has been found that when manganese dioxide nano-rods prepared by the method according to the present invention are employed and added during the decomposition of hydrogen peroxide, the decomposition rate of hydrogen peroxide can be effectively improved, so that more energy can be released instantaneously. As a result, the manganese dioxide nano-rods prepared by the method according to the examples of the present invention can be used as an excellent catalyzer in the decomposition of the hydrogen peroxide due to their high purity and specific structures as shown in Fig. 2 and Fig. 3. The manganese dioxide nano-rods also have high catalytic efficiency as listed in table 1 below.

The present invention will be further described in more details with reference to the examples.

### Example 1

A preparation method of manganese dioxide nano-rods comprises the steps of:
(1) mixing 0.015 mol of manganese nitrate and 0.0045 mol of hydrogen peroxide to prepare a mixed solution;
(2) adjusting the pH of the mixed solution to 4 using diluted ammonia with a mass concentration of 1%;
(3) transferring the mixed solution to a hydrothermal reaction autoclave where a hydrothermal reaction carries out at 180°C for 12 h;
(4) isolating the precipitate by filtrating after air cooling to room temperature, then washing the precipitate with distilled water until pH of the filtrate reaches 6, and finally washing the precipitate twice with anhydrous ethanol;
(5) drying the precipitate in a vacuum oven at 60°C for 24 h, to afford manganese dioxide nano-rods.

Manganese dioxide nano-rods prepared according to Example 1 of the present invention were evaluated using scanning electron microscope with a magnification of 5000 times and 40000 times, and the structures thereof were shown in Fig.2 (X 5,000) and Fig.3 (X 40,000). As can be seen from Fig.2 and Fig.3, manganese dioxide nano-rods prepared according to Example 1 have a uniform diameter of about 200 to 500 nm and have a length of 5 to 15 µm. Furthermore, it can be seen that many manganese dioxide nano-particles in the form of plush or snowflake were attached tp the manganese dioxide nano-rods. From the application experiment using manganese dioxide nano-rods as a catalyzer in the decomposition of hydrogen peroxide, it was demonstrated that manganese dioxide nano-particles in the form of plush or snowflake were useful for improving the catalytic performance of the manganese dioxide nano-rods.

### Example 2

A preparation method of manganese dioxide nano-rods comprises the steps of:
(1) mixing 0.015 mol of manganese nitrate and 0.00075 mol of hydrogen peroxide to prepare a mixed solution;
(2) adjusting the pH of the mixed solution to 5 using diluted ammonia with a mass concentration of 2%;
(3) transferring the mixed solution to a hydrothermal reaction autoclave where a hydrothermal reaction carries out at 190°C for 14 h;
(4) isolating the precipitate by filtrating after air cooling to room temperature, then washing the precipitate with distilled water until pH of the filtrate reaches 6, and finally washing the precipitate twice with anhydrous ethanol;
(5) drying the precipitate in a vacuum oven at 50°C for 8 h, to afford manganese dioxide nano-rods.

### Example 3

A preparation method of manganese dioxide nano-rods comprises the steps of:
(1) mixing 0.015 mol of manganese nitrate and 0.0015 mol of hydrogen peroxide to prepare a mixed solution;
(2) adjusting the pH of the mixed solution to 5 using diluted ammonia with a mass concentration of 3%;
(3) transferring the mixed solution to a hydrothermal reaction autoclave where a hydrothermal reaction carries out at 180°C for 12 h;
(4) isolating the precipitate by filtrating after air cooling to room temperature, then washing the precipitate with distilled water until pH of the filtrate reaches 7, and finally washing the precipitate twice with anhydrous ethanol;
(5) drying the precipitate in a vacuum oven at 70°C for 16 h, to afford manganese dioxide nano-rods.

### Example 4

A preparation method of manganese dioxide nano-rods comprises the steps of:
(1) mixing 0.015 mol of manganese nitrate and 0.003 mol of hydrogen peroxide to prepare a mixed solution;
(2) adjusting the pH of the mixed solution to 5 using diluted ammonia with a mass concentration of 5%;
(3) transferring the mixed solution to a hydrothermal reaction autoclave where a hydrothermal reaction carries out at 170°C for 10 h;
(4) isolating the precipitate by filtrating after air cooling to room temperature, then washing the precipitate with distilled water until pH of the filtrate reaches 7, and finally washing the precipitate twice with anhydrous ethanol;
(5) drying the precipitate in a vacuum oven at 80°C for 20 h, to afford manganese dioxide nano-rods.

### Example 5

A preparation method of manganese dioxide nano-rods comprises the steps of:
(1) mixing 0.015 mol of manganese nitrate and 0.006 mol of hydrogen peroxide to prepare a mixed solution;
(2) adjusting the pH of the mixed solution to 6 using diluted ammonia with a mass concentration of 8%;
(3) transferring the mixed solution to a hydrothermal reaction autoclave where a hydrothermal reaction carries out at 160°C for 8 h;
(4) isolating the precipitate by filtrating after air cooling to room temperature, then washing the precipitate with distilled water until pH of the filtrate reaches 7, and finally washing the precipitate twice with anhydrous ethanol;
(5) drying the precipitate in a vacuum oven at 90°C for 36 h, to afford manganese dioxide nano-rods.

### Example 6

A preparation method of manganese dioxide nano-rods comprises the steps of:
(1) mixing 0.015 mol of manganese nitrate and 0.0009 mol of hydrogen peroxide to prepare a mixed solution;
(2) adjusting the pH of the mixed solution to 6 using diluted ammonia with a mass concentration of 3%;
(3) transferring the mixed solution to a hydrothermal reaction autoclave where a hydrothermal reaction carries out at 150°C for 6 h;
(4) isolating the precipitate by filtrating after air cooling to room temperature, then washing the precipitate with distilled water until pH of the filtrate reaches 7, and finally washing the precipitate twice with anhydrous ethanol;
(5) drying the precipitate in a vacuum oven at 100°C for 48 h, to afford manganese dioxide nano-rods.

### Example 7

A preparation method of manganese dioxide nano-rods comprises the steps of:
(1) mixing 0.015 mol of manganese nitrate and 0.0018 mol of hydrogen peroxide to prepare a mixed solution;
(2) adjusting the pH of the mixed solution to 6 using diluted ammonia with a mass concentration of 8%;
(3) transferring the mixed solution to a hydrothermal reaction autoclave where a hydrothermal reaction carries out at 150°C for 6 h;
(4) isolating the precipitate by filtrating after air cooling to room temperature, then washing the precipitate with distilled water until pH of the filtrate reaches 6, and finally washing the precipitate twice with anhydrous ethanol;
(5) drying the precipitate in a vacuum oven at 100°C for 48 h, to afford manganese dioxide nano-rods.
The use of manganese dioxide nano-rods as a catalyzer in the decomposition of H₂O₂

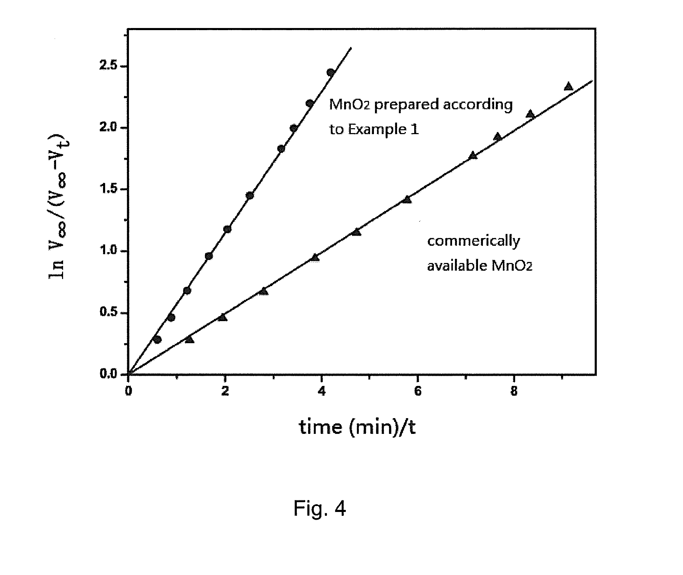

The catalytic activity of manganese dioxide nano-rods is determined as the decomposition reaction rate coefficient of 1% H₂O₂ under the basic condition at 15°C in the presence of a catalyzer in unit mass. 10 ml of 1% H₂O₂ was added to 50 ml of 1 mol·L⁻¹ KOH solution and the reaction temperature was controlled at 15°C. 20 mg of manganese dioxide nano-rods used for catalyzing the decomposition of H₂O₂ was added under magnetic stirring, and the volume of O₂ released at t (Vt) and the volume of O₂ released at complete decomposition (V_{∞}) were measured. A linear relationship between In V_{∞}/( V_{∞}- Vt) and t (i.e. In V_{∞}/(V_{∞}- Vt) vs. t) was obtained in the plot, and the reaction rate coefficient k can be calculated from the slope of the line. The catalytic activity data of manganese dioxide nano-rods prepared according to each example when used in the decomposition of hydrogen peroxide were listed in table 1. The rate of decomposition of hydrogen peroxide catalyzed by manganese dioxide nano-rods prepared according to Example 1 as a function of time was given in Fig.4.

**Table 1. The catalytic activity of manganese dioxide nano-rods prepared according to examples 1-6 when used in the decomposition of hydrogen peroxide**

| Example No. | Example 1 | Example 2 | Example 3 | Example 4 | Example 5 | Example 6 |
|---|---|---|---|---|---|---|
| rate coefficient k/(min⁻¹) | 1.08 | 0.76 | 0.93 | 0.88 | 0.64 | 0.44 |
| catalytic efficiency k/(s⁻¹·g⁻¹) | 0.9 | 0.63 | 0.78 | 0.73 | 0.53 | 0.37 |

As can be seen from table 1, manganese dioxide nano-rods prepared according to the examples of the present invention exhibit high catalytic activity when used in the decomposition of hydrogen peroxide. With reference to table 1 and Fig. 4, it can be seen that the decomposition rate coefficient k of H₂O₂ was up to 1.08 under the catalysis of the manganese dioxide nano-rods prepared according to Example 1 which has a catalytic efficiency up to 0.9.

It shall be understood by those skilled in the art that, while detailed description has been provided for preferred embodiments of the present invention, these should not be understood as limitations to the scope of the present invention, and the scope sought for protection in the present invention should subject to the appended claims.

## Claims

1. A preparation method of manganese dioxide nano-rods, comprising the steps of:
mixing manganese salt solution and hydrogen peroxide to prepare a mixed solution, and adjusting the pH of the mixed solution to 4-6;
subjecting the mixed solution of pH 4-6 to hydrothermal reaction at 150-190°C, to produce manganese dioxide precipitate;
subjecting the product of the hydrothermal reaction to solid-liquid separation after cooling and collecting the manganese dioxide precipitate;
washing and drying the manganese dioxide precipitate to obtain manganese dioxide nano-rods.

2. The method according to claim 1, wherein the mole ratio of manganese salt in the manganese salt solution to hydrogen peroxide is 1:0.05 to 1:0.5.

3. The method according to claim 1, wherein the mole ratio of manganese salt in the manganese salt solution to hydrogen peroxide is 1:0.3, and manganese salt in the manganese salt solution is at least one of manganese nitrate, manganese carbonate, manganese sulfate, manganese chloride and manganese acetate.

4. The method according to claim 1, wherein the hydrothermal reaction is carried out at 170°C to 180°C for 6 to 14 hours.

5. The method according to claim 1, wherein the hydrothermal reaction is carried out at 180°C for 10 to 12 hours.

6. The method according to claim 1, wherein ammonia with a mass concentration of 1-10% is used to adjust pH of the mixed solution to 4-6.

7. The method according to claim 6, wherein ammonia with a mass concentration of 1-3% is used.

8. The method according to claim 1, wherein the manganese dioxide precipitate is dried under vacuum at 50°C to 100°C for 8 to 48 hours.

9. The method according to claim 1, wherein the manganese dioxide nano-rods have a diameter of 200 nm to 500 nm and a length of 5 to 15 µm, and have manganese dioxide nano-particles in the form of plush or snowflake attached to their surfaces.

10. A use of manganese dioxide nano-rods prepared according to any one of claims 1-9 as a catalyzer in the decomposition of hydrogen peroxide.
